Europäisches Patentamt

European Patent Office

Office européen des brevets

(19)

(11) Numéro de publication : **0 110 768**
**B1**

(12) **FASCICULE DE BREVET EUROPÉEN**

(45) Date de publication du fascicule du brevet :
01.10.86

(51) Int. Cl.⁴ : **H 01 G 4/30**, H 01 G 1/14,
H 01 G 1/08

(21) Numéro de dépôt : 83402233.7

(22) Date de dépôt : 18.11.83

(54) **Condensateur multi-couches de puissance.**

(30) Priorité : 26.11.82 FR 8219926

(43) Date de publication de la demande :
13.06.84 Bulletin 84/24

(45) Mention de la délivrance du brevet :
01.10.86 Bulletin 86/40

(84) Etats contractants désignés :
DE GB NL

(56) Documents cités :
EP-A- 0 017 529
EP-A- 0 041 679
EP-A- 0 043 779
BE-A- 464 680
DE-C- 893 559
FR-A- 2 440 064
THE ELECTRONIC ENGINEER, vol. 27, no. 12, décembre 1968, page 14, New York, US "Capacitors operate at 1100F without supplemental cooling"

(73) Titulaire : **COMPAGNIE EUROPEENNE DE COMPO-SANTS ELECTRONIQUES LCC**
**50, rue Jean -Pierre Timbaud B.P. 301**
**F-92402 Courbevoie (FR)**

(72) Inventeur : **Hardy, Patrick**
**THOMSON-CSF SCPI 173, bld Haussmann**
**F-75379 Paris Cedex 08 (FR)**
Inventeur : **Cantagrel, Michel**
**THOMSON-CSF SCPI 173, bld Haussmann**
**F-75379 Paris Cedex 08 (FR)**
Inventeur : **Guichard, Serge**
**THOMSON-CSF SCPI 173, bld Haussmann**
**F-75379 Paris Cedex 08 (FR)**

(74) Mandataire : **Ruellan-Lemonnier, Brigitte et al**
**THOMSON-CSF SCPI 19, avenue de Messine**
**F-75008 Paris (FR)**

Jouve, 18, rue St-Denis, 75001 Paris, France

## Description

La présente invention a pour objet un condensateur multi-couches de puissance, susceptible de fonctionner sous forte puissance réactive ou en haute fréquence.

On connaît déjà (cf. par exemple EP-A-0 017 529) des condensateurs multi-couches de puissance présentant des électrodes internes s'étendant sur une partie au moins de chaque couche et connectées électriquement et thermiquement alternativement à l'une ou l'autre de deux terminaisons s'étendant sur un bord de jonction du condensateur et sur chacune desquelles vient se souder une connexion électrique. Ces électrodes internes laissent subsister sur les bords adjacents aux bords de jonction du condensateur une lisière isolante favorable à la tenue en tension du condensateur.

La présente invention a pour objet un condensateur présentant une structure optimisant le drainage thermique au niveau des connexions électriques, et autorisant de ce fait un fonctionnement du condensateur à des puissances réactives bien plus élevées qu'auparavant, toutes choses égales par ailleurs.

Le condensateur selon l'invention est caractérisé en ce que chaque connexion, la terminaison et les électrodes internes correspondantes sont en contact électrique et thermique sur le bord de jonction du condensateur et sur une partie d'au moins un bord adjacent audit bord de jonction.

Cette structure présente plusieurs avantages. D'une part, la surface de contact thermique entre les électrodes internes, les terminaisons et les connexions est importante ce qui est favorable au drainage des calories dissipées dans le condensateur pendant son fonctionnement. D'autre part, à puissance réactive égale, la puissance dissipée dans le condensateur est diminuée du fait que, les électrodes internes ayant une surface plus importante que dans l'art antérieur et étant en contact électrique avec les connexions sur un contour plus important que dans l'art antérieur, la résistance série du condensateur, facteur important de dissipation et facteur pratiquement unique de dissipation aux fréquences élevées, est de ce fait diminuée.

En outre, le fait que les électrodes internes s'étendent jusqu'à au moins un des bords adjacents des bords de jonction pour réaliser une connexion thermique et électrique avec une partie correspondante de la terminaison ne perturbe pas la tenue en tension du condensateur.

Les bords des connexions qui se trouvent en regard sur les bords latéraux peuvent être arrondis.

Les bords des connexions qui se trouvent en regard sur les bords latéraux peuvent être disposés dans des encoches anti-corona.

Les électrodes internes peuvent être en forme d'un T dont la barre est, sur ses parties supérieures et latérales, en contact électrique et thermique avec la terminaison correspondante.

Les connexions peuvent comporter, selon une première variante, chacune une région plane de telle sorte qu'elles peuvent être montées directement sur un pont thermique du circuit utilisateur.

Les connexions comportent, selon une deuxième variante, des portions recourbées permettant leur connexion sur le circuit utilisateur.

L'invention sera mieux comprise à la lecture de la description qui va suivre donnée à titre d'exemple non limitatif, en se reportant aux dessins ci-annexés où :

la figure 1 est une vue de dessus avec arrachement partiel laissant voir l'électrode interne supérieure d'un condensateur de l'art antérieur ;

la figure 2a représente une vue de dessus avec arrachement partiel laissant voir l'électrode interne supérieure d'un condensateur selon un mode de réalisation de l'invention ;

la figure 2b représente en perspective une connexion correspondante au mode de réalisation de la figure 2a ;

la figure 3 représente en coupe verticale un condensateur selon le mode de réalisation de la figure 2a ;

les figures 4a et 4b représentent en vue latérale deux variantes d'un condensateur suivant le mode de réalisation de la figure 2a ;

la figure 5a représente en vue de dessus une variante d'un condensateur suivant l'invention ;

la figure 5b représente en perspective une connexion d'un condensateur suivant le mode de réalisation représenté à la figure 5a ;

la figure 6 représente en vue de dessus une autre variante d'un condensateur suivant l'invention.

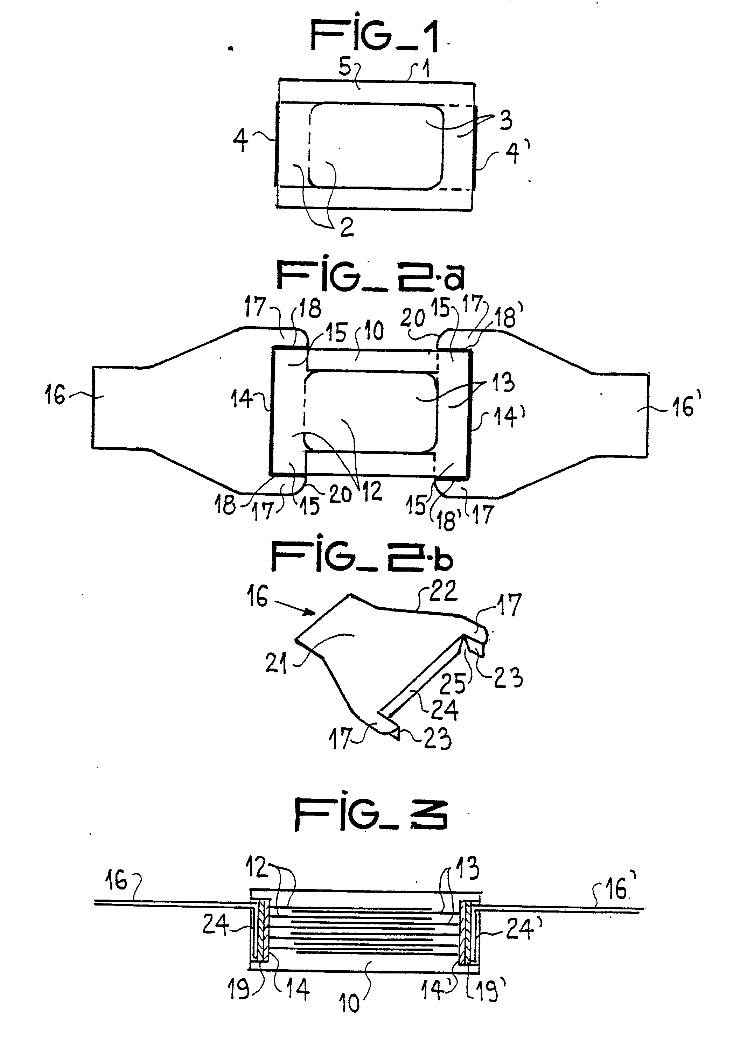

Selon la figure 1, un condensateur multi-couches du type céramique de l'art antérieur comprend un empilement d'électrodes internes de forme généralement rectangulaire. Les électrodes internes 2 et 3 sont connectées électriquement alternativement à l'une ou l'autre de deux terminaisons 4 et 4' sur lesquelles vient se souder une connexion électrique non représentée. Les électrodes internes 2 et 3 ne s'étendent pas sur toute la largeur de la surface céramique 1, mais laissent subsister latéralement deux bandes 5 permettant d'assurer l'isolation des électrodes internes les unes par rapport aux autres. La surface efficace des électrodes internes est de forme générale rectangulaire et est matérialisée par les surfaces communes de celle-ci en superposition.

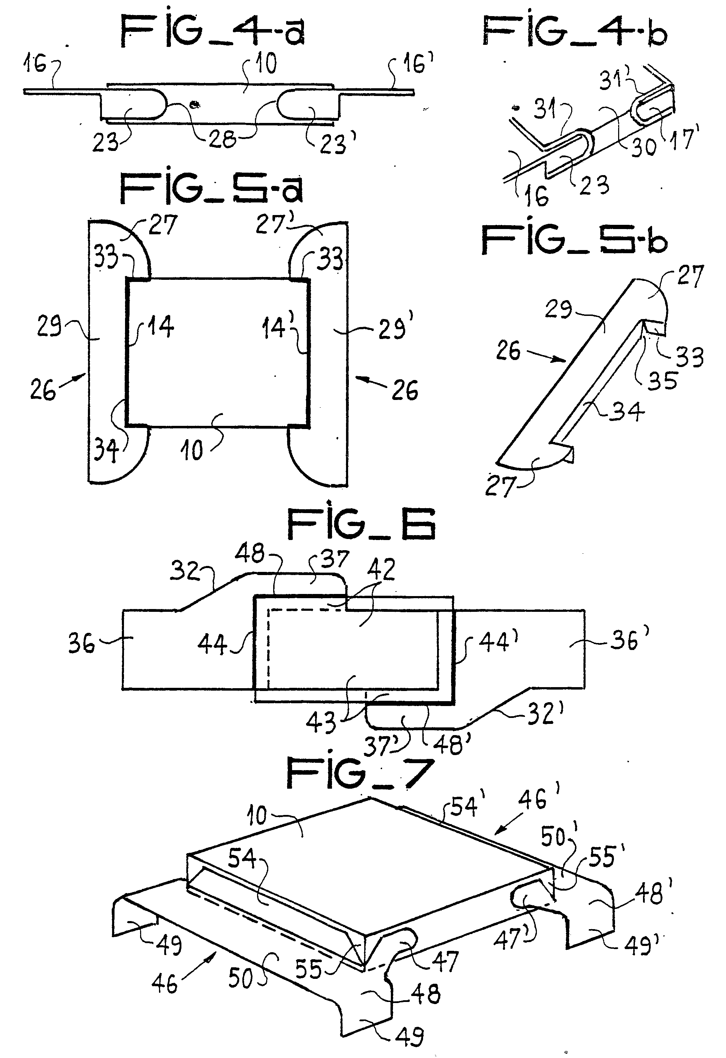

Selon les figures 2a et 2b, un condensateur multi-couches de puissance suivant l'invention comporte des électrodes internes 12 et 13 qui, au voisinage des terminaisons 14 et 14', s'étendent sur toute la largeur de la surface disponible de manière à être connectées électriquement et thermiquement sur des portions de terminaisons 18 et 18' respectivement qui sont le prolongement des terminaisons 14 sur les bords adjacents aux bords de jonction du condensateur où étaient disposées les terminaisons dans l'art antérieur. Les électrodes internes ont ainsi une forme de T dont la barre est en contact électrique et thermique avec la terminaison correspondante sur sa partie supérieure et sur ses bords latéraux. Comme dans l'art antérieur, la surface utile des électrodes internes est délimitée par un contour rectangulaire représentant la surface commune des électrodes internes en superposition. Cette configuration présente divers avantages qui vont tous dans le sens d'une augmentation de la puissance réactive acceptée par le condensateur. D'une part, l'augmentation de la surface des électrodes internes procure une diminution de la résistance série du condensateur, c'est-à-dire que la dissipation thermique du condensateur sera plus faible à puissance réactive égale. D'autre part, la surface de contact électrique entre les électrodes internes et les connexions 16 et 16' par l'intermédiaire des terminaisons 14 et 14' est accrue, ce qui abaisse la résistance électrique de contact entre les électrodes et les connexions. Enfin, et c'est l'élément prépondérant, la surface de contact thermique entre les électrodes internes et les connexions est également accrue dans les mêmes proportions, ce qui améliore grandement l'évacuation des calories dissipées dans le condensateur, c'est-à-dire, qu'à puissance réactive égale et puissance dissipée dans le condensateur égale, la température atteinte en tous points du condensateur sera abaissée, ou bien que pour une température maximale admise donnée à l'intérieur du condensateur, la puissance réactive pourra être augmentée. En pratique, ces améliorations permettent d'augmenter la puissance réactive admissible du condensateur dans un rapport par exemple de 2 à 4.

Selon la figure 2b, une connexion 16 présente une partie arrière plate 21 s'élargissant en 22 de manière à se raccorder à deux parties latérales 17 portant chacune une languette 23 venant se souder sur la portion latérale correspondante 18 de la terminaison 14. La portion plane 21 se prolonge également jusqu'à une languette centrale 24 venant se souder sur la partie principale de la terminaison 14. Les languettes 23 et 24 sont séparées par une échancrure 25 qui est obtenue lorsque les languettes sont rabattues à partir d'une plaque plane de dimension désirée par estampage. Dans cette configuration, les portions latérales 17 contribuent à la collecte des calories sur les côtés du condensateur de même que la partie centrale comprise entre elles draine les calories récoltées par la languette 24, la portion arrière 21 et toute la zone comprise entre celle-ci et la languette 24 servant de radiateur thermique, un contact électrique étant par ailleurs établi sur la connexion 16.

La figure 3 représente en coupe un condensateur suivant les figures 2a et 2b. Sur les terminaisons 14 et 14' et leurs portions latérales 18 sont soudées les languettes 24 et 24' ainsi que les languettes 23 et 23' par l'intermédiaire d'une couche de soudure 19, 19'. Les terminaisons sont de préférence en argent pur et sont réalisées de préférence à partir d'une pâte à sérigraphier qui sera ensuite frittée. Une pâte en argent pur donne après cuisson une terminaison présentant une très bonne liaison thermique.

Selon la figure 4a, en vue latérale, les portions latérales 23 et 23' et connexions 16 et 16' présentent à leurs extrémités une partie arrondie 28. On a déjà représenté à la figure 2a l'extrémité des parties latérales 17 présentant en vue de dessus un arrondi 20. Ainsi, les bords des connexions qui se trouvent en regard sur les bords latéraux du condensateur présentent-ils un contour arrondi évitant les amorçages par contournement entre les connexions 16 et 16' lorsqu'une tension élevée est appliquée au condensateur.

Selon la figure 4b, l'espace compris entre les bords des connexions reçoit un isolant 30, les connexions se trouvant de ce fait dans des encoches anti-corona 31.

Selon les figures 5a et 5b, les connexions 26 et 26' soudées sur les terminaisons respectivement 14 et 14' comportent des parties latérales 27 et 27' et une partie centrale 29 de largeur peu élevée de telle manière que le condensateur puisse être monté directement sur un pont thermique du circuit utilisateur qui viendra enserrer les parties centrales 29 et drainer directement les calories recueillies au niveau des terminaisons. Dans cette configuration, les connexions ne servent plus de radiateur d'évacuation des calories. Les calories sont évacuées par une connexion thermique constituée par le pont thermique du circuit utilisateur.

La figure 6 représente une variante de l'invention où les terminaisons 44 et 44' ne présentent de prolongements latéraux 48 et 48' que d'un seul côté. Les prolongements 48 et 48' sont situés sur des bords latéraux opposés du condensateur. Les métallisations respectivement 42 et 43 revêtent alors dans l'exemple représenté la forme d'un L, la surface utile des électrodes internes étant également dans ce cas de forme rectangulaire délimitée par les zones superposées des électrodes internes. Les connexions 36 et 36' présentent d'un côté un élargissement 32 et 32' respectivement et des portions latérales 37 et 37' venant se souder sur les terminaisons 48 et 48' respectivement, les connexions 36 et 36' étant également soudées bien entendu sur les portions centrales des terminaisons 44 et 44'.

Selon la figure 7, les connexions 46 et 46' présentent une languette centrale 54 et 54' et des languettes latérales 47 et 47' respectivement, séparées entre elles par des échancrures 55 et 55' respectivement. Ces échancrures proviennent de la mise en forme de la connexion par estampage à partir d'une feuille plane. Les extrémités de la partie centrale 50 et 50' respectivement des connexions 46 et 46' présentent à leurs extrémités des pattes respectivement 49 et 49' obtenues lors de l'estampage par repliement de la partie 50' en formant des arrondis 48 et 48' respectivement. Cette configuration permet une liaison électrique et thermique du condensateur en quatre points sur le circuit utilisateur. On remarquera que les pattes 47, 47' et 54, 54' ont été représentées dirigées vers le haut, cette configuration étant plus pratique dans le cas d'espèce.

## Revendications

1. Condensateur multi-couches de puissance présentant des électrodes internes s'étendant sur une partie au moins de chaque couche et connectées électriquement et thermiquement alternativement à l'une ou l'autre de deux terminaisons s'étendant sur un bord de jonction du condensateur et sur chacune desquelles vient se souder une connexion électrique, caractérisé en ce que chaque connexion (16, 16'), la terminaison (14, 14') et les électrodes internes (12, 13) correspondantes sont en contact électrique et thermique sur le bord de jonction du condensateur et sur une partie d'au moins un bord latéral adjacent audit bord de jonction.

2. Condensateur selon la revendication 1, caractérisé en ce que les bords (28) des connexions (16, 16') qui se trouvent en regard sur les bords latéraux sont arrondis.

3. Condensateur selon l'une des revendications 1 ou 2, caractérisé en ce que les bords des connexions qui se trouvent en regard sur les bords latéraux sont disposés dans des encoches anti-corona.

4. Condensateur selon l'une des revendications précédentes, caractérisé en ce que les électrodes internes (12, 13) sont en forme de T dont la barre est, sur ses parties supérieures et latérales, en contact électrique et thermique avec la terminaison correspondante (14, 14', 18, 18').

5. Condensateur selon l'une des revendications précédentes, caractérisé en ce que les connexions (16, 16') comportent chacune une région plane (29, 29') de telle sorte qu'elles peuvent être montées directement sur un pont thermique du circuit utilisateur.

6. Condensateur selon l'une des revendications 1 à 3, caractérisé en ce que les connexions (46, 46') comportent des portions recourbées (49, 49') permettant leur connexion sur le circuit utilisateur.

7. Condensateur selon la revendication 6, caractérisé en ce que les portions recourbées (49, 49') sont au nombre de 4.

## Claims

1. Multilayer power capacitor having internal electrodes extending over at least a part of each layer and connected electrically and thermally alternately to the one or other of two terminals extending at a terminal edge of the capacitor and to each of which an electrical connection is soldered, characterized in that each connecting (16, 16'), the terminal (14, 14') and the corresponding internal electrodes (12, 13) are in electrical and thermal contact at the terminal edge of the capacitor and at least a part of a side edge bordering the terminal edge.

2. Capacitor according to claim 1, characterized in that the edges (28) for the terminals (16, 16') facing each other at the side edges are rounded.

3. Capacitor according to claim 1 or 2, characterized in that the terminal edges facing each other at the side edges are disposed in anticorona recesses.

4. Capacitor according to any one of the preceding claims, characterized in that the inner electrodes (12, 13) have the form of a T whose bar is in electrical and thermal contact with the corresponding terminal (14, 14', 18, 18') at the upper and lateral parts.

5. Capacitor according to any one of the preceding claims, characterized in that the connections (16, 16') each comprise a planar region (29, 29') so that they can be mounted directly on a thermal bridge of the use circuit.

6. Capacitor according to any one claims 1 to 3, characterized in that the connections (46, 46') comprise bent portions (49, 49') which permit their connection to the use circuit.

7. Capacitor according to claim 6, characterized in that the number of bent portions (49, 49') is 4.

## Patentansprüche

1. Vielschichtiger Leistungskondensator, der interne Elektroden aufweist, welche sich über wenigstens einen Teil jeder Schicht erstrecken und elektrisch sowie thermisch abwechselnd mit dem einen oder anderen Anschluß von zwei Anschlüssen verbunden sind, die sich an einem Anschlußrand des Kondensators erstrecken und an die jeweils eine elektrische Verbindung angelötet wird, dadurch gekennzeichnet, daß jede Verbindung (16, 16'), der Anschluß (14, 14') und die entsprechenden internen Elektroden (12, 13) am Anschlußrand des Kondensators und an wenigstens einem Teil eines an den Anschlußrand angrenzenden Seitenrandes in elektrischem und thermischem Kontakt stehen.

2. Kondensator nach Anspruch 1, dadurch gekennzeichnet, daß die Ränder (28) für die Anschlüsse (16, 16'), die einander an den Seitenrändern zugewandt sind, abgerundet sind.

3. Kondensator nach Anspruch 1 oder 2, dadurch gekennzeichnet, daß die Anschlußränder, welche einander an den Seitenrändern zugewandt sind, in Antikorona-Aussparungen angeordnet sind.

4. Kondensator nach einem der vorstehenden Ansprüche, dadurch gekennzeichnet, daß die inneren Elektroden (12, 13) die Form eines T aufweissen, dessen Balken an den oberen und seitlichen Teilen in elektrischem und thermischem Kontakt mit dem entsprechenden Anschluß (14, 14', 18, 18') steht.

5. Kondensator nach einem der vorstehenden Ansprüche, dadurch gekennzeichnet, daß die Verbindungen (16, 16') jeweils einen ebenen Bereich (29, 29') aufweisen, so daß sie direkt auf einer thermischen Brücke der Anwendungsschaltung montiert werden können.

6. Kondensator nach einem der Ansprüche 1 bis 3, dadurch gekennzeichnet, daß die Verbindungen (46, 46') umgebogene Teile (49, 49') umfassen, welche ihren Anschluß an der Anwendungsschaltung gestatten.

7. Kondensator nach Anspruch 6, dadurch gekennzeichnet, daß vier umgebogene Teile (49, 49') vorhanden sind.

0 110 768

FIG_1

FIG_2·a

FIG_2·b

FIG_3

·1·

0 110 768

FIG_4-a

FIG_4-b

FIG_5-a

FIG_5-b

FIG_6

FIG_7

2